Europäisches Patentamt

European Patent Office

Office européen des brevets

(11) Publication number: **0 111 602**
**B1**

# EUROPEAN PATENT SPECIFICATION

(45) Date of publication of patent specification: **14.05.86**

(51) Int. Cl.⁴: **B 32 B 27/32, B 65 D 65/40**

(21) Application number: **82306711.1**

(22) Date of filing: **16.12.82**

(54) **Packaging bags.**

(43) Date of publication of application:
**27.06.84 Bulletin 84/26**

(45) Publication of the grant of the patent:
**14.05.86 Bulletin 86/20**

(84) Designated Contracting States:
**AT BE CH LI NL SE**

(56) References cited:
**EP-A-0 069 526**
**GB-A-1 368 634**
**GB-A-1 370 355**
**GB-A-2 028 716**
**GB-A-2 037 660**
**US-A-2 956 723**

(73) Proprietor: **IDEMITSU PETROCHEMICAL COMPANY LIMITED**
**No. 1-1, 3-chome, Marunouchi Chiyoda-ku Tokyo (JP)**

(72) Inventor: **Yaeo, Kenta**
**No. 1218-2, Kamiizumi Sodegaura-machi Kimitsu-gun Chiba-ken (JP)**
Inventor: **Kawamura, Shinji**
**No. 1218-2, Kamiizumi Sodegaura-machi Kimitsu-gun Chiba-ken (JP)**
Inventor: **Mihara, Yoshiyuki**
**No. 1660, Kamiizumi Sodegaura-machi Kimitsu-gun Chiba-ken (JP)**

(74) Representative: **SERJEANTS**
**25 The Crescent King Street Leicester, LE1 6RX (GB)**

Courier Press, Leamington Spa, England.

EP 0 111 602 B1

**Description**

The invention relates to packaging bags, and more particularly, to packaging bags which have high stiffness and blocking resistance and are therefore suitable for automatic packaging.

Heretofore, heavy-duty bags for packaging granular materials such as rice and wheat, powdery materials such as fertilizer and feed, and angular solid materials such as fowl have been made of low density polyethylene. These heavy-duty bags, however, are limited in their usefulness because of the low mechanical strength of low density polyethylene. In order to compensate for the poor mechanical strength, therefore, it is necessary to increase the film thickness. Particularly, in the case of heavy-duty bags, it is required for the film thickness to be markedly increased because of their seriously low tensile strength and stiffness. Furthermore, low density polyethylene is not suitable for use in the production of bags for automatic packaging because its stiffness is poor.

In recent years, therefore, bags made of a laminated film comprising a high density polyethylene layer and a low density polyethylene layer have been proposed to overcome the above-described problems of conventional bags (see Japanese Patent Application Laid-Open Nos. 92023/81 and 29426/82, and British Patent Specification No. 2028716A).

A bag prepared by using a film as disclosed in Japanese Patent Application Laid-Open Nos. 92023/81 and 29426/82 is very preferred for practical use because the seal strength and the film impact strength are high, the tear strength is well balanced, and furthermore, the outer layer is not slippery. However, when the bag is used to accommodate and convey angular heavy materials such as fowl, its film puncture strength, tear strength, impact resistance at low temperatures, and so forth become problems.

British Patent Specification No. 2028716A describes packaging bags formed from a laminar film structure comprising a layer of low density polyethylene and a layer of high density polyethylene blended with a major amount of an ethylene-α-olefin copolymer. The packaging bags are said to be suitable as waste bin liners. This teaches the reader to make bags strong enough for this purpose without using large quantities of materials other than low density polyethylene. Hence the low density polyethylene layer preferably comprises from 50 to 90% of the thickness of the bag. The examples show that high density polyethylene comprises only from 4.4 to 7.7% of the bag material. Furthermore, since the inner layer of the bag is made of low density polyethylene, blocking readily occurs and difficulties are encountered in opening the bag. It also takes much labour and time to place materials in the bag because the inner surface is slippery.

The invention provides a packaging bag comprising a first layer formed from a mixture of a high density polyethylene having a melt index of from 0.01 to 1 gram per 10 minutes and an ethylene-α-olefin copolymer and a second layer formed from a low density ethylene-based polymer having a melt index of from 0.3 to 10 grams per 10 minutes or a mixture thereof with not more than 90% by weight of an ethylene-vinyl acetate copolymer, characterised by the features recited in the characterising part of claim 1.

The outer layer of the bag of the invention is made of a low density ethylene-based polymer (hereinafter referred to as "LDPE") or a mixture of LDPE and an ethylene-vinyl acetate copolymer (hereinafter referred to as "EVA"). Various types of LDPE can be used in the invention. Usually they have a density of from 0.91 to 0.94 gram per cubic centimeter ($g/cm^3$), preferably from 0.915 to 0.935 $g/cm^3$. Their melt indexes (MI) are within the range of from 0.3 to 10 grams per 10 minutes (g/10 min), preferably from 0.3 to 4 g/10 min. When MI is more than 10 g/10 min, the impact resistance is lowered, unsuitably for practical use. On the other hand, when MI is less than 0.3 g/10 min, processability becomes low. The LDPE used includes that produced under high pressure and that produced under low pressure. Examples of such LDPE produced under low pressure include copolymers of ethylene and α-olefins containing from 3 to 12 carbon atoms (e.g. propylene, butene-1, pentene-1, hexene-1, 4-methylpentene-1 and nonene-1). The α-olefin unit content of the copolymers is preferably from 1 to 10% by mole.

When the outer layer of the present bag is made of a mixture of LDPE and EVA, the amount of EVA in the mixture should not exceed 90% by weight to avoid various problems arising; for example, a bag produced by using the resulting resin mixture has acetic acid odour and, furthermore, the surface of the bag excessively loses its smoothness. Such poor surface smoothness causes blocking between bags and makes bags stick to conveying equipments, e.g. a roller and the belt of a belt conveyor, as used in automatic packaging, resulting in a serious reduction in workability. Usually the ratio of LDPE/EVA is from 10/90 to 95/5 (by weight), with the range of from 60/40 to 90/10 (by weight) being preferred.

The inner layer of the bag of the invention is made of a mixture of a high density polyethylene (hereinafter referred to as "HDPE") and an ethylene-α-olefin copolymer. Various types of HDPE can be used in the invention. Usually they have a density ranging between 0.94 and 0.97 $g/cm^3$, with the range of from 0.945 to 0.965 $g/cm^3$ being preferred. Their melt indexes are within the range off from 0.01 to 1 g/10 min, preferably from 0.02 to 0.2 g/10 min. When MI is more than 1 g/10 min, the mechanical strength, e.g. tensile strength, of the resulting film is undesirably lowered. Various ethylene-α-olefin copolymers can be used in admixture with HDPE. The ethylene-α-olefin copolymer suitably has a density of from 0.910 to 0.940 $g/cm^3$, preferably from 0.915 to 0.935 $g/cm^3$, and a MI of from 0.3 to 10 g/10 min, preferably from 0.3 to 4 g/10 min. Preferred examples of α-olefins which can be used in the preparation of the copolymers are those monomers containing from 3 to 12 carbon atoms, such as propylene, butene-1, pentene-1, hexene-1, 4-methylpentene-1, octene-1 and nonene-1. The α-olefin unit content of the copolymer is suitably within the range of from 1 to 10% by mole.

Of these ethylene-α-olefin copolymers, ethylene-propylene-based copolymer elastomers (hereinafter referred to as "EP") are most suitable. Various types of EP can be used in the invention. Those elastomers having a Mooney viscosity of from 40 to 150 are preferred. When the Mooney viscosity is less than 40, the mechanical strength of the resulting film is undesirably lowered. Preferred examples of EP are ethylene-propylene rubber and ethylene-propylene terpolymers containing, as a third component, dienes such as divinylbenzene, 5-ethylidene-2-norbornene, 1,4-hexadiene, dicyclopentadiene and cyclooctadiene.

The ratio of HDPE to the ethylene-α-olefin copolymer is determined appropriately within the range 95:5 to 50:50 by weight depending on the purpose for which the ultimate bag is used. The range from 90/10 to 60/40 (by weight) is, however, preferred. When the proportion of the ethylene-α-olefin copolymer is less than 5% by weight, the puncture strength and seal strength of the resulting film are reduced, and when a bag prepared by using the film is dropped, it is easily torn. On the other hand, when it is more than 50% by weight, processability becomes low, and a bag prepared by using the resulting film has poor stiffness and is not suitable for practical use.

The bag of the invention comprises the above-described outer and inner layers which are laminated on each other. The ratio of the thickness of the outer layer to the thickness of the inner layer is determined within the range 1:99 to 60:40 depending on the purpose for which the bag is used.

When the thickness of the outer layer is more than 60% of the total thickness of the outer and inner layers, the tensile strength and stiffness of the bag are undesirably lowered. On the other hand, when it is less than 1%, the processability thereof becomes difficult.

The bag of the invention is usually of the two layer laminated structure consisting of an outer layer and an inner layer. If desired, a three layer laminated structure, including an intermediate layer between the outer and inner layers or having an innermost layer on the inner layer, can be used. The type of the intermediate layer being interposed between the outer and inner layers is not critical and can be determined appropriately depending on the purpose for which the bag is used. Although the type of the innermost layer is not critical as in the case with the intermediate layer, it is preferably made of an ethylene-α-olefin copolymer. Although the properties of the ethylene-α-olefin copolymer are not critical, the density is usually from 0.91 to 0.94 g/cm$^3$ and preferably from 0.915 to 0.935 g/cm$^3$, and MI is from 0.1 to 20 g/10 min and preferably from 0.2 to 10 g/10 min. The α-olefin content of the copolymer is usually within the range of from 1 to 10% by mole.

The bag of the invention can be produced by various techniques. For example, feed resin for the outer layer and feed resin for the inner layer are melted and kneaded at usual processing temperature in respective extruders and extruded therefrom, and then both of the resulting extruded resins are introduced into a circular die having double slit to form two layers which are bonded to each other inside the die. Thereafter, the inflation processing of the bonded two layers is performed at a blow ratio of from 2.5 to 8, preferably from 3 to 6, to obtain a tubular two layer film from which the bag of the present invention is produced. The outer layer and inner layer can be bonded together either outside or inside the die. It is preferred, however to bond together the layers inside the die since the bonding strength between the layers can be increased.

In producing the bag of the invention, if desired, additives such as pigment, a slip agent, an antioxidant, an antistatic agent and a weather resistance-improving agent may be incorporated into any one or both of the inner and outer layers at any processing step.

The bag of the invention having the above described structure is very superior in physical properties such as film puncture strength and tear strength to the conventional bags and, furthermore, its seal strength and impact resistance at low temperature are very high. Thus the bag of the invention can be used satisfactorily to accommodate therein and transfer heavy materials, particularly heavy angular materials such as fowl. Moreover, the bag of the invention is reduced in blocking properties and has high stiffness and, therefore, it is suitable for use in automatic packaging and greatly accelerates packaging efficiency. Furthermore, since the mechanical strength of the bag is great, the thickness of the bag is sufficient to be about 10 to 20 micrometers and, therefore, a reduction in thickness can be achieved, which is economically advantageous.

The invention is illustrated by the following Examples. In these Examples, physical tests were carried out according to the following methods.

Impact Resistance: Measured using a film impact tester (manufactured by Toyo Seiki Seisakujo Co. Ltd; specified impact load: 30 kg.cm (2.94 N.m); impact hammer diameter 25.4 mm). Puncture Strength: Measured according to JIS—Z—8401. Tear Strength: Measured according to JIS—Z—1702. Tensile Modulus: Measured according to JIS—Z—1702. Tensile Strength: Measured according to JIS—Z—1702. Elongation: Measured according to JIS—Z—1702. Seal Strength: Measured according to ASTM—D—1822.

Practical Drop Test: A bag was charged with 20 kg of chemical fertilizer and dropped on a concrete floor from a height of 2.5 meters in such a manner that the broad bag surface was horizontal to the floor. The bag-breakage ratio (number of broken bags/number of dropped bags) was determined.

Processability: By observing the continuous operation condition in processing a two layer film by an inflation method, the processability was evaluated on a numeric scale as follows:

3

3 ... Excellent, i.e. continuous operation can be performed stably for more than one week.
2 ... Good, i.e. continuous operation can be performed for 1 to 6 days.
1 ... Fair, i.e. continuous operation can be performed for 3 to 24 hours.

Appearance: Evaluated by observing with the eye. Blocking: Evaluated by examining whether or not the inner surfaces of a bag closely stick to each other in opening the bag after the production thereof.

3 ... The bag can be opened with ease.
2 ... The bag can be opened with slight difficulty.

Examples 1 to 16

Feed resin for an inner layer and feed resin for an outer layer as shown in Table 1 were melted and kneaded in the respective extruders and extruded therefrom, and thereafter, both of the resulting extruded resins were introduced into a circular die having double slit to form two layers which were bonded to each other inside the die. Then, inflation processing was performed at a blow ratio of 4.3 to obtain a tubular two layer film in which the ratio in thickness of the inner layer to the outer layer was 4:1 and the total thickness was 80 micrometers. From this tubular film was produced a bag having a width of 500 mm and a length of 620 mm wherein one end of the bag was heat-sealed. Physical tests were carried out on the bags, and the results are shown in Table 1.

In Table 1, the plastics materials are identified by single letters as follows:

A: High-pressure-produced LDPE having a density of 0.934 g/cm$^3$ and a MI of 3 g/10 min.
B: High-pressure-produced LDPE having a density of 0.926 g/cm$^3$ and a MI of 0.4 g/10 min.
C: High-pressure-produced LDPE having a density of 0.921 g/cm$^3$ and a MI of 0.6 g/10 min.
D: High-pressure-produced LDPE having a density of 0.917 g/cm$^3$ and a MI of 8 g/10 min.
E: High-pressure-produced LDPE having a density of 0.924 g/cm$^3$ and a MI of 3 g/10 min.
F: Low-pressure-produced LDPE having a density of 0.921 g/cm$^3$, a MI of 3.7 g/10 min, and a C$_8$ α-olefin content of 10.3% by weight.
G: EVA having a density of 0.94 g/cm$^3$, a MI of 0.6 g/10 min, and a vinyl acetate content of 15% by weight.
H: HDPE having a density of 0.954 g/cm$^3$ and a MI of 0.05 g/10 min.
I: Ethylene-propylene copolymer having a Mooney viscosity ML$_{1+4}$ (100°C) of 60, and a propylene content of 27% by weight.
J: Ethylene-propylene terpolymer having a Mooney viscosity ML$_{1+4}$ (100°C) of 90 and a propylene content of 28% by weight.
K: Ethylene-propylene terpolymer having a Mooney viscosity ML$_{1+4}$ (100°C) of 105 and a propylene content of 43% by weight.
L: Ethylene-propylene terpolymer having a Mooney viscosity ML$_{1+4}$ (100°C) of 42 and a propylene content of 43% by weight.

Examples 17 and 18

The bags of Examples 3 and 4 respectively were charged with 20 kilograms (kg) each of chemical fertilizer, were allowed to stand one day and night in a room maintained at −20°C, and then were subjected to the practical drop test to determine the bag breakage ratio. In Example 17 the bag breakage ratio was 15%, whilst the bag breakage ratio in Example 18 was 0%.

TABLE 1

| Example | | Inner Layer | | | | Outer Layer | | | | Strength of Bag | | | |
| | | HDPE | | EP | | LDPE | | EVA | | Impact Resistance | Puncture Strength | Tear Strengths MD/TD | Tensile Modulus MD/TD |
| Example | Type | wt% | Type | wt% | Type | wt% | Type | wt% | N.m | N.m | N/m | pascals $\times 10^6$ |
|---|---|---|---|---|---|---|---|---|---|---|---|---|
| 1 | H | 95 | J | 5 | B | 100 | — | | 1.27 | 1.27 | 21600/34300 | 729/726 |
| 2 | H | 90 | J | 10 | B | 100 | — | | 1.27 | 4.71 | 39200/78500 | 647/676 |
| 3 | H | 80 | J | 20 | B | 100 | — | | 1.27 | 9.41 | 65700/107900 | 472/486 |
| 4 | H | 70 | J | 30 | B | 100 | — | | 1.37 | 10.98 | 88300/107900 | 379/375 |
| 5 | H | 60 | J | 40 | B | 100 | — | | 1.47 | 14.51 | 117700/107900 | 294/314 |
| 6 | H | 50 | J | 50 | B | 100 | — | | 1.57 | 16.18 | 127500/107900 | 245/265 |
| 7 | H | 80 | J | 20 | C | 100 | — | | 1.18 | 8.83 | 49000/88300 | 520/549 |
| 8 | H | 80 | J | 20 | A | 100 | — | | 1.08 | 4.71 | 39200/68600 | 522/557 |
| 9 | H | 80 | J | 20 | E | 100 | — | | 1.16 | 4.71 | 44100/68600 | 520/559 |
| 10 | H | 80 | J | 20 | D | 100 | — | | 0.98 | 3.92 | 39200/58800 | 530/539 |
| 11 | H | 80 | J | 20 | F | 100 | — | | 1.13 | 5.88 | 49000/68600 | 520/569 |
| 12 | H | 80 | K | 20 | A | 100 | — | | 1.13 | 4.90 | 49000/68600 | 522/557 |
| 13 | H | 80 | L | 20 | A | 100 | — | | 1.08 | 5.30 | 58800/68600 | 520/559 |
| 14 | H | 80 | I | 20 | A | 100 | — | | 1.08 | 5.30 | 36300/69600 | 567/584 |
| 15 | H | 80 | I | 20 | B | 100 | — | | 1.27 | 5.88 | 58800/88300 | 502/523 |
| 16 | H | 80 | J | 20 | A | 90 | G | 10 | 1.08 | 5.88 | 44100/63700 | 530/545 |

TABLE 1 (continued)

| Example | Tensile Strength MD/TD pascals $\times 10^6$ | Elongation MD/TD % | Seal Strength N.m | Practical Drop Test (Bag Breakage Radio) (%) | Process- ability | Appearance | Blocking |
|---------|------|---------|---------|-----|---|------|---|
| 1 | 38/39 | 460/510 | 0.196 | 40 | 3 | good | 3 |
| 2 | 37/39 | 540/500 | 0.392 | 15 | 3 | good | 3 |
| 3 | 36/35 | 540/500 | >0.392 | 0 | 3 | good | 3 |
| 4 | 34/35 | 570/520 | >0.392 | 0 | 3 | good | 3 |
| 5 | 33/32 | 580/550 | >0.392 | 0 | 2 | good | 3 |
| 6 | 32/31 | 580/550 | >0.392 | 0 | 1 | good | 3 |
| 7 | 36/42 | 510/460 | 0.392 | 0 | 3 | good | 3 |
| 8 | 36/41 | 500/450 | 0.392 | 5 | 3 | good | 3 |
| 9 | 36/42 | 500/460 | 0.392 | 5 | 3 | good | 3 |
| 10 | 36/38 | 510/490 | 0.392 | 25 | 2 | good | 3 |
| 11 | 36/39 | 510/490 | 0.392 | 0 | 3 | good | 3 |
| 12 | 36/43 | 500/480 | 0.392 | 0 | 3 | good | 3 |
| 13 | 33/38 | 510/500 | 0.392 | 0 | 3 | good | 3 |
| 14 | 35/35 | 560/620 | 0.343 | 5 | 3 | good | 3 |
| 15 | 34/32 | 540/440 | 0.343 | 5 | 3 | good | 3 |
| 16 | 38/42 | 500/440 | 0.392 | 5 | 2 | good | 3 |

## Examples 19 to 23

Feed resin for an outer layer and feed resin for an inner layer as shown in Table 2 were melted and kneaded in the respective extruders and extruded therefrom, and thereafter, both of the resulting extruded resins were introduced into a circular die having double slit to form two layers which were bonded to each other inside the die. Then, inflation processing was performed at a blow ratio of 4.3 to obtain a tubular two layer structure film in which the ratio in thickness of the outer layer to the inner layer was 1:4 and the total thickness of the two layers was 50 micrometers. One end of the tubular two layer structure film was heat-sealed to produce a packaging bag having a width of 340 mm and a length of 570 mm.

The bag thus produced was subjected to various physical tests. The results are shown in Table 2. In Table 2 the plastics materials are identified by single letters as follows:

M: High-pressure-produced LDPE having a density of 0.924 $g/cm^3$ and a MI of 3.0 g/10 min.
N: Ethylene-octene-1 copolymer having a density of 0.922 $g/cm^3$ and a MI of 2.3 g/10 min.
O: Low-pressure-produced HDPE having a density of 0.955 $g/cm^3$ and a MI of 0.05 g/10 min.

TABLE 2

| | | Inner Layer | | Tensile Characteristics | | | |
| | | O | N | Tensile Strength MD/TD | Tensile Modulus MD/TD | Elongation MD/TD | Tear Strength MD/TD |
| Example | Outer Layer | (wt%) | (wt%) | (pascals × $10^6$) | (pascals × $10^6$) | (%) | (N/m) |
|---|---|---|---|---|---|---|---|
| 19 | M | 90 | 10 | 43.1/45.1 | 785/824 | 420/460 | 11000/57100 |
| 20 | M | 80 | 20 | 43.1/44.9 | 708/803 | 410/510 | 14000/80600 |
| 21 | M | 70 | 30 | 41.3/43.1 | 606/659 | 440/560 | 20200/76000 |
| 22 | M | 60 | 40 | 40.1/40.7 | 511/618 | 460/580 | 28700/97400 |
| 23 | N | 70 | 30 | 39.2/43.1 | 608/637 | 460/580 | 22000/89200 |

TABLE 2 (continued)

| Example | Impact Resistance (N.m) | Puncture Strength (N.m) | Seal Strength (N.m) | Practical Drop Test (bag breakage ratio) | Blocking Resistance | Processability |
|---|---|---|---|---|---|---|
| 19 | 1.59 | 4.9 | 0.196 | 3/10 | 3 | 3 |
| 20 | 1.41 | 5.9 | 0.343 | 0/10 | 3 | 3 |
| 21 | 1.31 | 6.4 | 0.686 | 0/10 | 3 | 3 |
| 22 | 1.28 | 6.7 | 0.735 | 0/10 | 3 | 3 |
| 23 | 1.30 | 6.9 | 0.686 | 0/10 | 3 | 3 |

### Examples 24 and 25

Feed resin for an innermost layer, feed resin for an inner layer, and feed resin for an outer layer as shown in Table 3 were melted and kneaded in the respective extruders and extruded therefrom, and thereafter, the three resulting extruded resins were introduced into a circular die to form three layers which were bonded to each other inside the die. Then, inflation processing was performed at a blow ratio of 4.3 to obtain a 50-micrometers thick three layer laminated film. The laminated film thus produced was subjected to the same physical testings as in Example 1. The results are shown in Table 3.

In Table 3 the plastics materials are identified by single letters as follows:

P: Ethylene-butene-1 copolymer having a density of 0.921 $g/cm^3$, a MI of 3.7 g/10 min and a butene-1 content of 7.5% by weight.

Q: High-pressure-produced LDPE having a density of 0.924 $g/cm^3$ and a MI of 3.0 g/10 min.

R: HDPE having a density of 0.954 $g/cm^3$ and a MI of 0.05 g/min.

S: Ethylene-propylene rubber having a Mooney viscosity $ML_{1+4}$ (100°C) of 60 and a propylene unit content of 27% by weight.

| Example | Innermost | Inner Layer | | Outer Layer | Ratio of Layer Thickness* | Tensile Characteristics | | |
| --- | --- | --- | --- | --- | --- | --- | --- | --- |
| | | R (wt%) | Ethylene-α-Olefin Copolymer (wt%) | | | Tensile Strength MD/TD (pascals $\times 10^6$) | Tensile Modulus MD/TD (pascals $\times 10^6$) | Elongation MD/TD (%) |
| 24 | P | 70 | P 30 | Q | 3:6:1 | 34.8/41.2 | 588/637 | 550/600 |
| 25 | P | 85 | S 15 | P | 3:6:1 | 34.3/42.2 | 539/569 | 580/600 |

TABLE 3 (continued)

| Example | Tear Strength MD/TD (N/m) | Puncture Strength (N.m) | Seal Strength (N.m) | Blocking Resistance | Processability |
| --- | --- | --- | --- | --- | --- |
| 24 | 29400/73500 | 5.64 | 0.59 | 2 | 2 |
| 25 | 34300/58800 | 5.88 | 0.69 | 2 | 2 |

* Ratio in thickness of innermost layer to inner layer to outer layer.

# 0 111 602

## Claims

1. A packaging bag comprising a first layer formed from a mixture of a high density polyethylene having a melt index of from 0.01 to 1 gram per 10 minutes and an ethylene-α-olefin copolymer and a second layer formed from a low density ethylene-based polymer having a melt index of from 0.3 to 10 grams per 10 minutes or a mixture thereof with not more than 90% by weight of an ethylene-vinyl acetate copolymer, characterised in that the second layer is the outer layer of the bag, the ratio of high density polyethylene to ethylene-α-olefin copolymer in the first layer is from 95:5 to 50:50 by weight, and the ratio of the thickness of the first layer to that of the second layer is from 99:1 to 40:60.

2. A bag according to claim 1 characterised in that the low density ethylene-based polymer has a density of from 0.91 to 0.94 gram per cubic centimeter.

3. A bag according to claim 1 or claim 2 characterised in that the low density ethylene-based polymer is an ethylene homopolymer or a copolymer of ethylene and an α-olefin containing from 3 to 12 carbon atoms.

4. A bag according to any preceding claim characterised in that the high density polyethylene has a density of from 0.94 to 0.97 gram per cubic centimeter.

5. A bag according to any preceding claim characterised in that the ethylene-α-olefin copolymer of the first layer is an ethylene-propylene-based elastomer.

6. A bag according to any preceding claim characterised in that the bag further comprises a third plastics layer between the first and second layers.

7. A bag according to any of claims 1 to 6 characterised in that the bag further comprises a plastics layer on the face of the first layer opposite to the second layer.

## Patentansprüche

1. Verpackungsbeutel, welcher eine erste Schicht, gebildet aus einer Mischung eines Polyethylens hoher Dichte mit einem Schmelzindex von 0.01 bis 1 Gramm pro 10 Minuten und einem Ethylen-α-Olefin-Copolymeren, und eine zweite Schicht, gebildet aus einem Polymeren niedriger Dichte auf Ethylenbasis mit einem Schmelzindex von 0.3 bis 10 Gramm pro 10 Minuten oder einer Mischung davon mit nicht mehr als 90 Gew.-% eines Ethylen-Vinylacetat-Copolymeren, aufweist, dadurch gekennzeichnet, daß die zweite Schicht die äußere Schicht des Beutels ist, das Verhältnis Polyethylen hoher Dichte zu Ethylen-α-Olefin-Copolymeren in der ersten Schicht von 95:5 bis 50:50 an Gewicht beträgt und as Verhältnis der Dicke der ersten Schicht zu der der zweiten Schicht von 99:1 bis 40:60 beträgt.

2. Beutel nach Anspruch 1, dadurch gekennzeichnet, daß das Polymere niedriger Dichte auf Ethylenbasis eine Dichte von 0.91 bis 0.94 g/cm$^3$ aufweist.

3. Beutel nach Anspruch 1 oder Anspruch 2, dadurch gekennzeichnet, daß das Polymere niedriger dichte auf Ethylenbasis ein Ethylenhomopolymeres oder ein Copolymer aus Ethylen und einem α-Olefin mit 3 bis 12 Kohlenstoffatomen ist.

4. Beutel nach jedem vorstehenden Anspruch, dadurch gekennzeichnet, daß das Polyethylen hoher Dichte eine Dichte von 0.94 bis 0.97 g/cm$^3$ aufweist.

5. Beutel nach jedem vorstehenden Anspruch, dadurch gekennzeichnet, daß das Ethylen-α-Olefin-Copolymere der ersten Schicht ein Elastomer auf Ethylen-Propylen-Basis ist.

6. Beutel nach jedem vorstehenden Anspruch, dadurch gekennzeichnet, daß der Beutel weiterhin eine dritte Plastikschicht zwischen der ersten und zweiten Schicht aufweist.

7. Beutel nach jedem der vorstehenden Ansprüche 1 bis 6, dadurch gekennzeichnet, daß der Beutel weiterhin eine Plastikschicht auf der Oberfläche der ersten Schicht gegenüber der zweiten Schicht aufweist.

## Revendications

1. Sac d'emballage comprenant une première couche formée à partir d'un mélange d'un polyéthylène de forte densité ayant un indice de mélange entre 0,01 et 1 gramme par 10 minutes et d'un copolymère d'éthylène-α-oléfine et une seconde couche formée à partir d'un poymère à faible densité à base d'éthylène ayant un indice de mélange entre 0,3 et 10 grammes par 10 minutes ou d'un mélange de celui-ci en quantité inférieure à 90% en poids avec un copolymère d'acétate d'éthylène-vinyle, caractérisé en ce que la seconde couche et la couche extérieure du sac, le rapport en poids du polyéthylène de forte densité au copolymère d'éthylène-α-oléfine est entre 95:5 et 50:50, et le rapport de l'épaisseur de la première couche à celle de la deuxiéme couche est entre 99:1 et 40:60.

2. Sac selon la revendication 1 caractérisé en ce que le polymère à faible densité à base d'éthylène, a une densité comprise entre 0,91 et 0,94 grammes par centimètre cube.

3. Sac selon la revendication 1 ou 2, caractérisé en ce que le polymère á faible densité à base d'éthylène est un homopolymère d'éthylène ou un copolymère d'éthylène et une α-oléfine contenant de 3 à 12 atomes de carbone.

4. Sac selon l'une quelconque des revendications précédentes caractérisé en ce que le polyéthylène de forte densité a une densité comprise entre 0,94 et 0,97 grammes par centimètre cube.

11

5. Sac selon l'une quelconque des revendications précédentes caractérisé en ce que le copolymère d'éthylène-α-oléfine de la première couche est un élastomère à base d'éthylène-propylène.

6. Sac selon l'une quelconque des revendications précédentes, caractérisé en ce que le sac comprend de plus une troisième couche de plastique entre la première et la seconde couche.

7. Sac selon l'une quelconque des revendications de 1 à 6, caractérisé en ce que le sac comprend de plus une couche de plastique sur le côté de la première couche faisant face à la seconde couche.